# EUROPEAN PATENT SPECIFICATION

(11) **EP 0 784 003 B1**
(45) Date of publication and mention of the grant of the patent: **21.11.2001**
(21) Application number: 96121006.9
(22) Date of filing: 30.12.1996
(51) Int. Cl.: B60T 13/66

(54) **Assembly for controlling braking of a railway train**
Bremssteuervorrichtung von einem Eisenbahnzug
Agencement de commande de freinage d'un train de chemin de fer

(30) Priority: 09.01.1996 IT TO960004
(43) Date of publication of application: 16.07.1997
(73) Proprietor: SAB WABCO S.p.A., I-10045 Piossasco (Torino) (IT)
(72) Inventor: Barberis, Dario, 10134 Torino (IT)
(74) Representative: Cerbaro, Elena, Dr.

(56) References cited:
- EP-A- 0 278 928
- EP-A- 0 722 869
- US-A- 5 332 297

## Description

The present invention relates to an assembly for controlling braking of a railway train, in particular a railway train comprising a large number of vehicles.

Braking of a railway train is controlled by an assembly of the type described and illustrated in Italian Patent n. 118 49 25 and European Patent Application n° EP-A-0 278 928 filed respectively by the present Applicant on 22/03/1985 and 12/02/1988, and which comprises a main pneumatic conduit connected to a compressed air source; a general pneumatic conduit extending along the whole length of the train and connected by a number of distributors to a corresponding number of brake cylinders; a relay valve interposed between the main and general conduits to charge and discharge the general conduit; and one or more rapid exhaust valves interposed between the general conduit and the relay valve.

The train is normally braked by discharging or depressurizing the general conduit by means of the relay valve to brake the train gradually, or by means of the rapid exhaust valve to stop the train sharply.

Following the braking stage, the general conduit must be recharged or repressurized and brought rapidly up to a given operating pressure normally in the region of five bars, e.g. to prevent the train from being run under partial braking conditions.

Whereas repressurization is performed fairly easily in the case of relatively "short" trains, i.e. with a small number of vehicles, using the known "supercharging" method (5.4 bar maximum repressurization pressure), various problems are encountered in the case of "long" trains, i.e. with a decidedly large number of vehicles.

That is, in the case of "long" trains, the general conduit, by extending along the whole length of the train, may very often be as long as a thousand meters, so that repressurization of the conduit in the "supercharge" condition may take as long as a few minutes, especially in the event of "rapid" braking of the train, in which case the pressure of the general conduit is substantially reduced to zero.

In other words, during repressurization, no further control operations can be performed until the pressure inside the whole of the general conduit, and more specifically inside the portion of the conduit extending along the end of the train, is restored to the required normal operating pressure (5 bar), which waiting period creates serious problems, especially when the train is run downhill.

It is an object of the present invention to provide a straightforward assembly for controlling braking of a railway train, designed to overcome the aforementioned drawback, and which in particular provides for rapidly repressurizing the general conduit regardless of the number of vehicles of which the train is composed.

According to the present invention, there is provided an assembly for controlling braking of a railway train, the assembly comprising a main pneumatic conduit connected to a compressed air source; a general pneumatic conduit extending along the whole length of the train and connected to a corresponding number of brake cylinders; and a relay valve for connecting the main conduit and the general conduit, and for charging and discharging, in use, the general conduit; characterized by also comprising bypass circuit means for bypassing said relay valve and, in use, permitting compressed air flow from the main conduit to the general conduit.

In the assembly defined above, said bypass circuit means preferably comprise selecting means for selectively connecting said general conduit to said main conduit or to said relay valve.

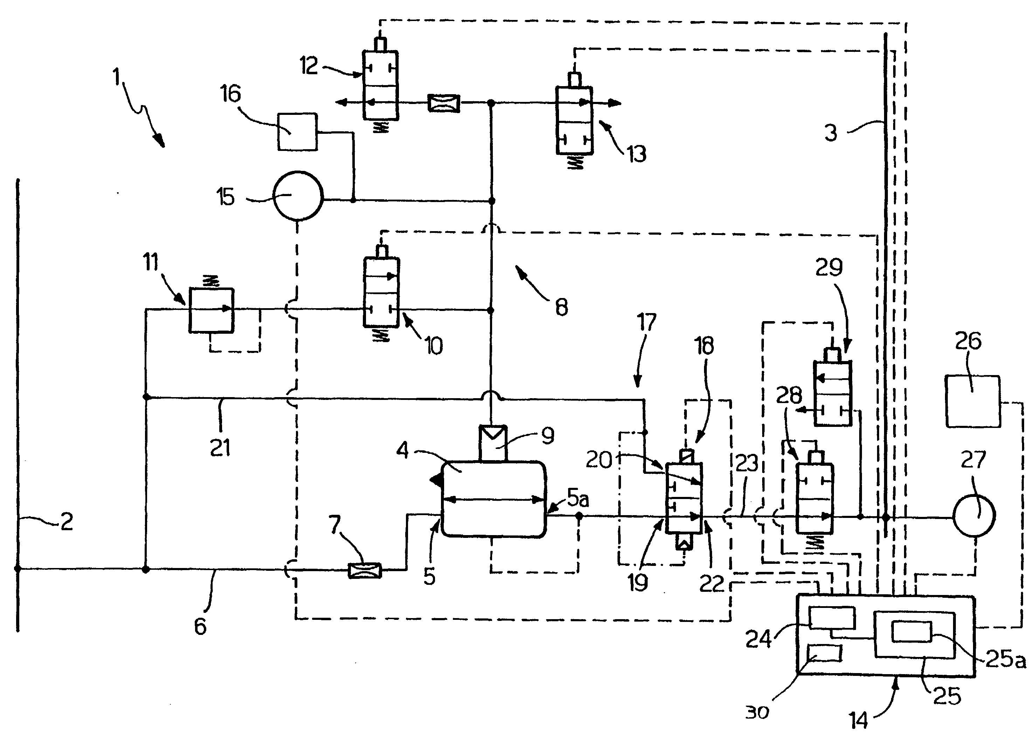

The invention will now be described with reference to the accompanying drawing, which shows a schematic view of a preferred non-limiting embodiment of the control assembly according to the present invention.

Number 1 in the accompanying drawing indicates an assembly for controlling a railway train (not shown) comprising a number of vehicles (not shown) and of relatively considerable length, in particular a few hundred meters.

Assembly 1 is of the type described and illustrated in Italian Patent n. 118 49 25 and comprises a main pneumatic conduit 2 connected to a compressed air source (not shown) and which is pressurized to a given pressure P1 normally of about 8-10 bars; and a general pneumatic conduit 3.

General conduit 3 has a pressure varying, in use, between zero and a given maximum operating pressure P2 normally in the region of 5 bars, extends substantially along the whole length of the train (not shown), and is connected by a number of known distributors (not shown) to a number of known pneumatic brake cylinders (not shown) on the vehicles.

Assembly 1 also comprises a known relay valve 4, which has an inlet port 5 connected to main conduit 2 by a conduit 6 fitted with a fixed choke 7, and is controlled by a known drive device 8 to gradually charge and discharge general conduit 3, which, when the train is not being braked, is maintained at given operating pressure P2.

More specifically, relay valve 4 comprises a control chamber 9, and device 8 comprises a supply or release solenoid valve 10, the outlet port of which is connected to chamber 9, and the inlet port of which is connected to the outlet port of a pressure limiting valve 11. Limiting valve 11 forms part of device 8, has an inlet port connected to main conduit 2, and is so regulated as to supply a maximum output pressure of 5.4 bars.

Device 8 also comprises a known discharge or brake solenoid valve 12 and a known safety solenoid valve 13, both of which are two-position types, are located parallel to each other, and are connected pneumatically to chamber 9.

Solenoid valves 10, 12 and 13 are all connected electrically to a known electronic control unit 14, which, in use, provides for energizing solenoid valves 10, 12 and 13 in response to a number of signals supplied to unit 14 by a known keyer or selector (not shown) for selecting the operating conditions of assembly 1.

Device 8 also comprises a pressure transducer 15, also connected electrically to unit 14, and a gauge 16, both of which are interposed between relay valve 4 and solenoid valves 12 and 13 to determine, in use, the pressure inside chamber 9 of relay valve 4.

Again with reference to the accompanying drawing, assembly 1 also comprises a pneumatic bypass circuit 17 for bypassing relay valve 4, connecting main conduit 2 to general conduit 3, and permitting compressed air flow directly from main conduit 2 to general conduit 3.

Circuit 17 comprises a selection solenoid valve 18, which in turn comprises a first inlet/outlet port 19 connected pneumatically to an inlet/outlet port 5a of relay valve 4, and a second inlet port 20 connected to main conduit 2 by a conduit 21. Solenoid valve 18 also comprises a further inlet/outlet port 22 connected pneumatically to general conduit 3 by a conduit 23, and of the type having two operating positions. More specifically, solenoid valve 18 is switchable between a first operating position maintained by a pneumatic drive and in which it pneumatically connects relay valve 4 and general conduit 3; and a second operating position in which it connects main conduit 2 directly to general conduit 3.

Solenoid valve 18 is connected electrically to unit 14, which provides for switching solenoid valve 18 to said second position whenever "supercharging" is required, i.e. whenever relatively fast pressurization of general conduit 3 is required to bring the pressure of conduit 3 up to operating value P2. More specifically, unit 14 comprises a known timing assembly 24 for maintaining solenoid valve 18 in the second operating position for an adjustable switch or hold time T; and a known regulating device 25 for so regulating timing assembly 24 as to continuously vary said switch time T.

According to a preferred embodiment, device 25 comprises a memory 25a in which are stored a number of operating maps relating switch time T to input operating parameters or data detected on the train and, in particular, as the train is running. Such data or parameters may, for example, comprise the pressure in main conduit 2; the instantaneous pressure at at least one point along general conduit 3; the rate and/or pattern of increase in pressure in general conduit 3 within a given time following switching of solenoid valve 18 to the second operating position, or within a predetermined pressure range; and possibly the length of general conduit 3.

Unit 14 is also connected electrically to a manually controlled, e.g. key-operated, device 26 for disabling the energizing signal of solenoid valve 18 emitted by unit 14, and so maintaining solenoid valve 18 permanently in the first operating condition; and to a pressure transducer 27 for detecting the variation in pressure at a point along general conduit 3 and preferably, but not necessarily, adjacent to solenoid valve 18.

Again with reference to the accompanying drawing, assembly 1 also comprises an isolation solenoid valve 28 located between selection solenoid valve 18 and general conduit 3; and a rapid discharge solenoid valve 29 connected to conduit 23 between isolation solenoid valve 28 and general conduit 3. Solenoid valve 29 is connected to unit 14, which also comprises a known block 30, which, following activation of valve 29, i.e. following discharge connection of conduit 3, so controls either one or both of solenoid valves 18 and 28 as to prevent airflow along conduit 23 to conduit 3. Alternatively, according to a variation not shown, isolation solenoid valve 28 is replaced by an isolation valve controlled mechanically by manually operating said keyer or selector (not shown).

Operation of assembly 1 will now be described as of the condition in which selection solenoid valve 18 is set to the first operating position and device 26 is set to the position enabling unit 14, and as of the instant in which "gradual" or "rapid" braking of the train has just been terminated, thus requiring repressurization of general conduit 3, i.e. to restore the pressure in general conduit 3 to operating value P2 (5 bar).

As of the above condition, and upon a signal being sent by the operator to unit 14, e.g. by means of said keyer or selector (not shown), unit 14 energizes selection solenoid valve 18 to switch it to the second operating position; in which position, solenoid valve 18 cuts off compressed air flow through port 5a of relay valve 4, and permits compressed air flow directly from main conduit 2 - pressurized, as stated, at pressure P1 (normally 8-10 bar) - to general conduit 3, which is gradually pressurized.

At this point, timing assembly 24 maintains selection solenoid valve 18 in the second operating position for said time T set by device 25, which determines time T in known manner as soon as solenoid valve 18 is switched to the second operating position.

More specifically, regulating device 25 operates in such a manner that, within time T, the whole of general conduit 3, and more specifically an end portion of general conduit 3 extending along the end of the train, reaches a pressure at least equal to said operating pressure P2 (5 bar).

At this point, timing assembly 24 de-energizes solenoid valve 18, which is reset by the hydraulic drive to the first operating position. After which, the pressure in general conduit 3 is made equal in the same way as in known assemblies following "supercharging." More specifically the pressure in general conduit 3, which obviously differs between the front and rear of the train, is made equal by operating relay valve 4, which slowly discharges general conduit 3 to prevent timely operation of the brake cylinders (not shown).

As compared with known assemblies, circuit 17 for bypassing relay valve 4 therefore provides, following any braking action, for rapidly pressurizing general conduit 3 and, in particular, for rapidly reaching at least operating pressure P2 (5 bar) at any point along conduit 3.

In fact, when solenoid valve 18 is set to the second operating position, general conduit 3 is connected directly to main conduit 2 and is therefore supplied with compressed air at a pressure which, as opposed to being just slightly higher (5.4 bar) than pressure P2 as in the case of "supercharging" by known assemblies, is actually almost twice the value of pressure P2. Moreover, once solenoid valve 18 is reset to the first operating position, assembly 1 operates in the same way and, more specifically, performs the same functions as known assemblies, thus avoiding any difficulty, for example, to the driver of the train.

Clearly, changes may be made to assembly 1 as described and illustrated herein without, however, departing from the scope of the present invention. More specifically, a different valve assembly may be substituted for selection solenoid valve 18; and the system for controlling switching of solenoid valve 18 may be other than that described herein by way of example.

## Claims

1. An assembly (1) for controlling braking of a railway train, the assembly (1) comprising a main pneumatic conduit (2) connected to a compressed air source; a general pneumatic conduit (3) extending along the whole length of the train and connected to a corresponding number of brake cylinders; and a relay valve (4) for connecting the main conduit (2) and the general conduit (3), and for charging and discharging, in use, the general conduit (3); **characterized by** also comprising bypass circuit means (17) for bypassing said relay valve (4) and, in use, permitting compressed air flow from the main conduit (2) to the general conduit (3).

2. An assembly as claimed in Claim 1, **characterized in that** said bypass circuit means (17) comprise selecting means (18) for selectively connecting said general conduit (3) to said main conduit (2) or to said relay valve (4).

3. An assembly as claimed in Claim 2, **characterized in that** said selecting means comprise at least one selection valve (18) associated with the relay valve (4); and control means (14) for switching the selection valve (18) between a first operating position in which the selection valve (18) connects the general conduit (3) pneumatically to the relay valve (4), and a second operating position in which the selection valve (18) pneumatically connects the general conduit (3) and the main conduit (2) to permit said direct compressed air flow.

4. An assembly as claimed in Claim 3, **characterized in that** said control means (14) comprise timing means (24) for imposing a hold time (T) of said selection valve (18) in said second operating position.

5. An assembly as claimed in Claim 4, **characterized in that** said control means (14) comprise regulating means (25) for regulating said timing means (24) and varying said hold time (T) as a function of detectable operating parameters.

6. An assembly as claimed in one of the foregoing Claims from 3 to 5, **characterized by** comprising further control means (26) operated manually to permanently maintain said selection valve (18) in said first operating position.

7. An assembly as claimed in one of the foregoing Claims from 3 to 6, **characterized by** comprising isolating means (28) interposed between said general conduit (3) and said selection valve (18), and for pneumatically isolating the general conduit (3).

8. An assembly as claimed in Claim 7, **characterized by** comprising a rapid discharge valve (29) interposed between said isolating means (28) and the general conduit (3); said control means (14) comprising a block (30) for emitting a control signal at least to said isolating means (28), when the general conduit (3) is discharge connected by said rapid discharge valve (29), to prevent airflow to said general conduit (3).

9. An assembly as claimed in Claim 8, **characterized in that** at least said selection valve (18) or said rapid discharge valve (29) is a solenoid valve, and said control means (14) comprise an electronic unit (14).

## Patentansprüche

1. Vorrichtung (1) zur Bremssteuerung für ein Schienenfahrzeug, wobei die Vorrichtung (1) eine an eine Druckluftquelle angeschlossene pneumatische Hauptleitung (2), eine sich über die gesamte Länge des Fahrzeugs erstreckende und mit einer entsprechenden Anzahl von Bremszylindern verbundene pneumatische Generalleitung (3) und ein Zwischenventil (4) zur Verbindung der Hauptleitung (2) und der Generalleitung (3) sowie im Betrieb zur Druckbeaufschlagung und Entlüftung der Generalleitung (3) aufweist, **dadurch gekennzeichnet, dass** weiterhin Umgehungsleitungsmittel (17) zur Umgehung des Zwischenventils (4) und im Betrieb zum Durchlass eines Druckluftstromes von der Hauptleitung (2) in die Generalleitung (3) vorhanden sind.

2. Vorrichtung nach Anspruch 1, **dadurch gekennzeichnet, dass** die Umgehungsleitungsmittel (17) Auswahlmittel (18) zur gezielten Verbindung der Generalleitung (3) mit der Hauptleitung (2) oder mit dem Zwischenventil (4) aufweisen.

3. Vorrichtung nach Anspruch 2, **dadurch gekennzeichnet, dass** die Auswahlmittel wenigstens ein dem Zwischenventil (4) zugeordnetes Auswahlventil (18) und Steuermittel (14) zum Schalten des Auswahlventils (18) zwischen einer ersten Betriebsstellung, in der das Auswahlventil (18) die Generalleitung (3) pneumatisch mit dem Zwischenventil (4) verbindet, und einer zweiten Betriebsstellung, in der das Auswahlventil (18) die Generalleitung (3) und die Hauptleitung (2) zum Durchlass des direkten Druckluftstromes pneumatisch verbindet, aufweisen.

4. Vorrichtung nach Anspruch 3, **dadurch gekennzeichnet, dass** die Steuermittel (14) Zeitschaltmittel (24) zur Ansteuerung des Auswahlventils (18) in der zweiten Betriebsstellung mit einer Haltezeit (T) aufweisen.

5. Vorrichtung nach Anspruch 4, **dadurch gekennzeichnet, dass** die Steuermittel (14) Einstellmittel (25) zum Einstellen des Zeitschaltmittels (24) und zur Variation der Haltezeit (T) in Abhängigkeit von erfassbaren Betriebsparametern aufweisen.

6. Vorrichtung nach einem der Ansprüche 3 bis 5, **dadurch gekennzeichnet, dass** weiterhin von Hand betätigbare Steuermittel (26) vorhanden sind, um das Auswahlventil (18) permanent in der ersten Betriebsstellung zu halten.

7. Vorrichtung nach einem der Ansprüche 3 bis 6, **dadurch gekennzeichnet, dass** zwischen der Generalleitung (3) und dem Auswahlventil (18) eingefügte Trennmittel (28) zur pneumatischen Abtrennung der Generalleitung (3) vorhanden sind.

8. Vorrichtung nach Anspruch 7, **dadurch gekennzeichnet, dass** ein zwischen den Trennmitteln (28) und der Generalleitung (3) eingefügtes schnelles Entlüftungsventil (29) vorhanden ist und dass die Steuermittel (14) eine Einheit (30) zum Aussenden eines Steuersignals wenigstens an die Trennmittel (28) aufweisen, wenn die Generalleitung (3) durch das schnelle Entlüftungsventil (29) zum Verhindern eines Luftflusses in die Generalleitung (3) zur Entlüftung angebunden ist.

9. Vorrichtung nach Anspruch 8, **dadurch gekennzeichnet, dass** wenigstens das Auswahlventil (18) oder das schnelle Entlüftungsventil (29) ein Magnetventil ist und die Steuermittel (14) eine elektronische Einheit (14) aufweisen.

## Revendications

1. Ensemble (1) pour commander le freinage d'un train de chemin de fer, l'ensemble (1) comportant un tuyau pneumatique principal (2) connecté à une source d'air comprimé, un tuyau pneumatique général (3) s'étendant le long de toute la longueur du train et connecté à un nombre de cylindres de frein correspondant, et une servo-soupape (4) pour connecter le tuyau principal (2) et le tuyau général (3), et pour charger et évacuer, en utilisation, le tuyau général (3), **caractérisé en ce qu'**il comporte également des moyens formant circuit de dérivation (17) pour contourner ladite servo-soupape (4) et, en utilisation, permettre à de l'air comprimé de s'écouler à partir du tuyau principal (2) vers le tuyau général (3).

2. Ensemble selon la revendication 1, **caractérisé en ce que** lesdits moyens formant circuit de dérivation (17) comportent des moyens de sélection (18) pour connecter de manière sélective ledit tuyau général (3) audit tuyau principal (2) ou à ladite servo-soupape (4).

3. Ensemble selon la revendication 2, **caractérisé en ce que** lesdits moyens de sélection comportent au moins une vanne de sélection (18) associée à ladite servo-soupape (4), et des moyens de commande (14) pour commuter la vanne de sélection (18) entre une première position de fonctionnement dans laquelle la vanne de sélection (18) connecte le tuyau général (3) de manière pneumatique à la servo-soupape (4), et une seconde position de fonctionnement dans laquelle la vanne de sélection (18) connecte de manière pneumatique le tuyau général (3) et le tuyau principal (2), pour permettre ledit écoulement d'air comprimé direct.

4. Ensemble selon la revendication 3, **caractérisé en ce que** lesdits moyens de commande (4) comportent des moyens de synchronisation (24) pour imposer un temps de maintien (T) de ladite vanne de sélection (18) dans ladite seconde position de fonctionnement.

5. Ensemble selon la revendication 4, **caractérisé en ce que** lesdits moyens de commande (14) comportent des moyens de réglage (25) pour régler lesdits moyens de synchronisation (24), et faire varier ledit temps de maintien (T) en fonction de paramètres de fonctionnement pouvant être détectés.

6. Ensemble selon l'une quelconque des revendications 3 à 5, **caractérise en ce qu'**il comporte de plus des moyens de commande (26) actionnés manuellement pour maintenir en permanence ladite vanne de sélection (18) dans ladite première position de fonctionnement.

7. Ensemble selon l'une quelconque des revendications 3 à 6, **caractérisé en ce qu'**il comporte des moyens isolants (28) interposés entre ledit tuyau général (3) et ladite vanne de sélection (18), et destinés à isoler de manière pneumatique le tuyau général (3).

8. Ensemble selon la revendication 7, **caractérisé en, ce qu'**il comporte une vanne d'évacuation rapide (29) interposée entre lesdits moyens isolants (28) et le tuyau général (3), lesdits moyens de commandé (14) comportant un bloc (30) destiné à émettre un signal de commande au moins vers lesdits moyens isolants (28), lorsque ledit tuyau général (3) est connecté en évacuation par ladite vanne d'évacuation rapide (29), pour empêcher un écoulement d'air vers ledit tuyau général (3).

9. Ensemble selon la revendication 8, **caractérisé en ce qu'**au moins ladite vanne de sélection (18), ou ladite vanne d'évacuation rapide (29), est constituée d'une électrovanne, et lesdits moyens de commande (14) comportent une unité électronique (14).
